Europäisches Patentamt

European Patent Office

Office européen des brevets

(11) Publication number: **0 023 727**
**B1**

(12) # EUROPEAN PATENT SPECIFICATION

(45) Date of publication of patent specification: **30.05.84**

(21) Application number: **80200148.7**

(22) Date of filing: **22.02.80**

(51) Int. Cl.³: **C 21 B 3/06,** F 22 B 1/04,
F 27 D 17/00

(54) **A process and apparatus for recovering energy from molten slag.**

(30) Priority: **03.08.79 NL 7901887**

(43) Date of publication of application:
**11.02.81 Bulletin 81/06**

(45) Publication of the grant of the patent:
**30.05.84 Bulletin 84/22**

(84) Designated Contracting States:
**AT BE CH DE FR GB IT LU SE**

(56) References cited:
**DE-C- 365 992**
**FR-A- 578 633**
**FR-A-2 345 664**
**GB-A- 195 267**
**US-A-1 585 892**
**US-A-2 038 765**
**US-A-3 677 327**

(73) Proprietor: **PELT & HOOYKAAS B.V.**
**1 Bijlstraat**
**NL-3087 AA Rotterdam (NL)**

(72) Inventor: **Hooykaas, Carel Willem Jan, Mr.**
**44 Oranjelaan**
**NL-3062 BT Rotterdam (NL)**

(74) Representative: **van der Veken, Johannes**
**Adriaan et al**
**EXTERPATENT Willem Witsenplein 4**
**NL-2596 BK 's-Gravenhage (NL)**

Courier Press, Leamington Spa, England.

EP 0 023 727 B1

**0 023 727**

## Description

The invention relates to a process for recovering energy from liquid molten slag material obtained in metallurgical processes, wherein heat emitted by said slag material by radiation, is recovered in a radiation heat recovering region being positioned at distance from said liquid molten slag material.

Such a process wherein the radiation heat is absorbed into a fluid passing to pipes positioned at distance from the liquid slag material is known from FR—A—2 345 664.

The process according to the invention is characterised in that an intermediate heat reflecting corrosion-resistant molybdenum plate is positioned between the radiation heat recovering region and the level of the liquid molten slag material.

Such a process is very appropriate in that the recovery of the radiation heat takes place under optimum conditions and moreover, a crust on the liquid slag will not be formed as long as the liquid slag presents a high temperature.

Another advantage of the present invention is that notwithstanding an excellent heat recovery, for instance when conveying said material through gutters, the flowing molten slag material may be observed continuously, as said molten slag material sometimes contains big lumps which could give rise to obstructions in the gutters. If the slag flowing through the gutters could not be inspected in the process of the invention this might lead to damages to gutters or to the apparatus being used for the recovery of heat, including dangers to the operators of said apparatus.

According to an advantageous embodiment of the present invention the heat radiation is recovered by a radiation energy cell system.

Preferably the intermediate corrosion-resistant molybdenum plate has a thickness of at least 0.01 mm and of at most 1 mm.

The use of molybdenum is very convenient as said material is particularly corrosion-resistant, a property which is in this case very advantageous in view of corrosive fumes, smokes and the like emitted by molten slag material.

The molybdenum plate will moreover reflect half of the emitted radiation to the slag material, which is appropriate since the upper surface of the slag material will consequently be re-heated so that the flowing properties of the slag material are being maintained entirely.

Furthermore such a plate offers the advantage that much longer gutters may be used, resulting in an optimum recovery of the radiation heat.

It has been found that in a process according to the invention a considerable percentage of the emitted radiation may be recovered as under these conditions the radiation of the slag material will not cause a decrease of the flowing properties of said material such, that the material is more difficult to convey.

In each case a corresponding type of radiation energy collector cell has to be used being responsive to the respective energy spectrum. Suitable collectors operate with a eV of 0.2 to 0.7 and preferably of 0.25 eV. In this manner especially the radiation energy being emitted in the spectrum, ranging from 550°C to 1400°C is absorbed.

The present invention also relates to an apparatus for recovering energy from liquid molten slag material, obtained in metallurgical processes, in which the apparatus is provided with a radiation energy recovery system being disposed at distance from a location for accommodating said liquid molten slag material, being characterized in that a heat reflecting corrosion-resistant molybdenum plate is provided between the radiation energy recovery system and said location.

Said apparatus for recovering energy from liquid molten slag material, particularly comprises a gutter consisting of a refractory material, the radiation energy cell system being disposed at distance above the upper side of said gutter.

When the latter measure is applied, the flowing velocity of the molten slag through said gutter may be continuously inspected thus causing suitable actions to be performed when necessary, for instance to prevent obstructions or material from flowing over said gutter.

The present invention will be illustrated with respect to an embodiment in the drawing wherein

Figure 1 diagrammatically shows a gutter for conveying molten slag material,

Figure 2 shows a cross section of such a gutter including a radiation energy collector cell system, being disposed thereabove.

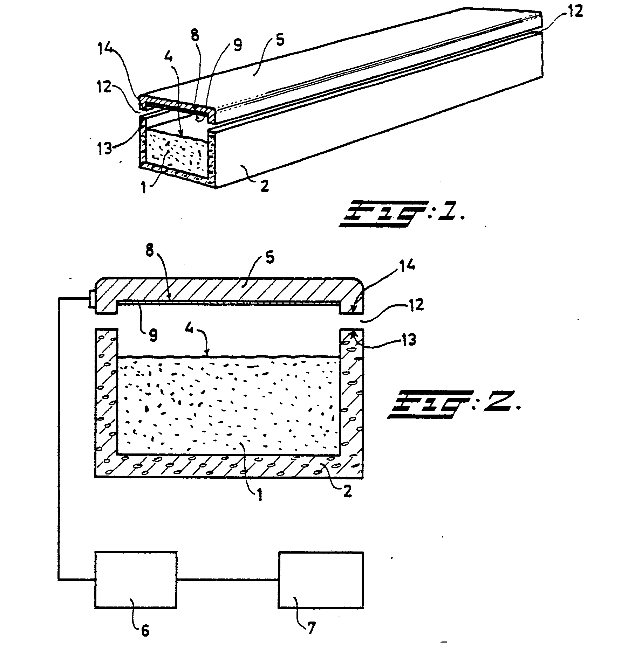

Figure 1 shows a transport gutter 2, consisting of refractory bricks. Said gutter 2 serves for transferring molten slag material 1 as drained off from a blast furnace. Said slag material arrives in said gutter at a temperature of about 1200°C.

Efforts have been made to replace the refractory brick material of the gutter by e.g. double-walled steel gutters and by having water or another suitable fluid circulate through the walls of said gutter. In the latter case a recovery of heat has proved to be rather difficult, however, due to the presence of molten iron having a high temperature in the aforementioned molten slag material, thereby damaging the steel gutters.

Above the gutter 2, to with at distance from the level 4 of the molten slag material 1, a radiation energy collector 5 is accommodated of a type known per se. Said radiation energy collector of 0.25 eV recovers heat being emitted by the molten slag material. The energy collected by said collector is emitted to an energy accumulator 6 from which other installations 7 may be fed.

Such radiation energy collector 5 is effectively protected against the action of corrosive fumes and smoke, being emitted from the molten slag material, by the presence of an intermediate plate 9 of molybdenum, having a thickness of about 0.01 mm and being disposed between the active surface 8 of the radiation energy collector and the level 4 of the molten slag material.

Said molybdenum plate 9 will reflect half of the radiation emitted, upon the molten slag material, thus causing said material to be reheated, so that an optimum radiation of the slag material is maintained.

The presence of said molybdenum plate 9 is the more important as presently gutters may be used, the length of which is considerably increased as, due to the abovedescribed feature, the flowing properties of the molten slag material will be optimally maintained, while furthermore a recovery of radiation heat may also be performed to an optimum extent.

On summarizing the features of the process according to the present invention, it is obvious that the greater part of the radiation being emitted by molten slag material of 1200°C may be recovered.

In the configuration of Figure 2 a clearance 12 exists between the upper edge 13 of the gutter 2 and the lower edge 14 of the radiation energy collector 5. Said clearance 12 permits a continuous inspection of the molten slag material 1 in the gutter 2. Since frequent obstructions may occur in said gutter 2 because of the presence of lumps in the molten slag, the equipment of the radiation energy collectors should preferably consist of small parts which may easily be removed from the upper side of the gutter.

Obviously a recovery of energy from molten slag material in blast furnaces should be performed discontinuously, as said slag material is released when discharging a charge from a blast furnace.

The process in accordance with the invention may be performed continuously in phosphor slag furnaces, as molten phosphor slag material is continuously conveyed through the gutters.

The average height of the gutter is approximately 20 cm while the active bottom surface has a width of about 30 cm.

## Claims

1. A process for recovering energy from liquid molten slag material obtained in metallurgical processes, wherein heat emitted by said slag material by radiation, is recovered in a radiation heat recovering region being positioned at distance from said liquid molten slag material, characterized in that an intermediate heat reflecting corrosion-resistant molybdenum plate is positioned between the radiation heat recovering region and the level of the liquid molten slag material.

2. Process according to claim 1, characterized in that the corrosion resistant molybdenum plate has a thickness of at least 0.01 mm and of at most 1 mm.

3. A process according to any or more of the foregoing claims, characterized in that said molybdenum plate reflects about half of the emitted radiation heat.

4. A process according to claim 1—3, characterized in that the heat emitted by radiation is recovered by a radiation energy cell system.

5. An apparatus for recovering energy from liquid molten slag material, obtained in metallurgical processes, in which the apparatus is provided with a radiation energy recovery system (5), being disposed at distance from a location (2) for accommodating said liquid molten slag material (1) characterized in that a heat reflecting corrosion-resistant molybdenum plate (9) is provided between the radiation energy recovery system (5) and said location (2).

6. An apparatus according to claim 5, characterized in that the corrosion resistant molybdenum plate has a thickness of at least 0.01 mm and of at most 1 mm.

7. An apparatus according to claim 6, characterized in that said molybdenum plate reflects about half of the emitted radiation heat.

8. An apparatus according to claim 5—7, characterized in that the radiation energy recovery system is a radiation cell energy system positioned at distance above the upper side of a gutter consisting of refractory materials, for accommodating the liquid molten slag.

## Patentansprüche

1. Verfahren zur Rückgewinnung von Energie aus einem flüssigen geschmolzenen Schlackenmaterial, das bei metallurgischen Prozessen erhalten wird, wobei die von dem Schlackenmaterial durch Strahlung emittierte Wärme in einem Strahlungswärme-Rückgewinnungsbereich wiedergewonnen wird, der im Abstand von dem flüssigen geschmolzenen Schlackenmaterial angeordnet ist, dadurch gekennzeichnet, daß eine wärmereflektierende, korrosionsfeste Zwischenplatte aus Molybdän zwischen dem Strahlungswärme-Rückgewinnungsbereich und dem Pegel des flüssigen geschmolzenen Schlackenmaterials angeordnet wird.

2. Verfahren nach Anspruch 1, dadurch gekennzeichnet, daß die korrosionsfeste Platte aus Molybdän eine Stärke von wenigstens 0,01 mm und von höchstens 1 mm aufweist.

3. Verfahren nach einem oder mehreren der vorhergehenden Ansprüche, dadurch gekennzeichnet, daß die Platte aus Molybdän etwa die Hälfte der emittierten Strahlungswärme reflektiert.

4. Verfahren nach Anspruch 1 bis 3, dadurch gekennzeichnet, daß die durch Strahlung emittierte Wärme durch ein Strahlungsenergie-Zellensystem wiedergewonnen wird.

5. Vorrichtung zur Rückgewinnung von Energie aus flüssigem geschmolzenen Schlackenmaterial, das bei metallurgischen Prozessen erhalten wird, wobei die Vorrichtung mit einem Strahlungsenergie-Rückgewinnungssystem (5) versehen ist, das im Abstand von einer Stelle (2) für die Aufnahme des flüssigen geschmolzenen Schlackenmaterials (1) angeordnet ist, dadurch gekennzeichnet, daß zwischen dem Strahlungsenergie-Rückgewinnungssystem (5) und der Stelle (2) eine wärmereflektierende korrosionsfeste Platte (9) aus Molybdän vorgesehen ist.

6. Vorrichtung nach Anspruch 5, dadurch gekennzeichnet, daß die korrosionsfeste Platte aus Molybdän eine Stärke von wenigstens 0,01 mm und von höchstens 1 mm hat.

7. Vorrichtung nach Anspruch 6, dadurch gekennzeichnet, daß die Platte aus Molybdän etwa die Hälfte der emittierten Strahlungswärme reflektiert.

8. Vorrichtung nach den Ansprüchen 5 bis 7, dadurch gekennzeichnet, daß das Strahlungsenergie-Rückgewinnungssystem ein Strahlungsenergie-Zellensystem ist, das im Abstand über der Oberseite einer aus feuerfesten Materialien bestehenden Rinne für die Aufnahme der flüssigen geschmolzenen Schlacke angeordnet ist.

## Revendications

1. Procédé de récupération d'énergie de scories fondues à l'état liquide, obtenues dans le traitement de métaux, où la chaleur qu'émettent, par radiation, lesdites scories est récupérée dans une zone de récupération de la chaleur irradiée, logée à une certaine distance desdites scories fondues et à l'état liquide, caractérisé en ce qu'une plaque intermédiaire en molybdène réfléchissant la chaleur et résistant à la corrosion est disposée entre la zone de récupération de la chaleur irradiée et le niveau des scories liquides fondues.

2. Procédé selon la revendication 1, caractérisé en ce que la plaque en molybdène et résistant à la corrosion a une épaisseur d'au moins 0,01 mm et d'au plus 1 mm.

3. Procédé selon l'une ou les revendications précédentes, caractérisé en ce que ladite plaque en molybdène reflète environ la moitié de la chaleur irradiée.

4. Procédé selon les revendications 1 à 3, caractérisé en ce que la chaleur émise par radiation est récupérée par un système cellulaire de récupération de l'énergie.

5. Un appareil de récupération d'énergie à partir de scories fondues et à l'état liquide, provenant du traitement de métaux, cet appareil comprenant un système (5) de récupération de l'énergie irradiée, disposé à une certaine distance d'une zone (2) où lesdites scories (1) fondues et à l'état liquide sont disposées, caractérisé en ce qu'une plaque en molybdène (9) résistant à la corrosion est disposée entre le système (5) de récupération de l'énergie irradiée et ladite zone (2).

6. Appareil selon la revendication 5, caractérisé en ce que la plaque en molybdène et résistant à la corrosion a une épaisseur d'au moins 0,01 mm et d'au plus 1 mm.

7. Appareil selon la revendication 6, caractérisé en ce que ladite plaque en molybdène réfléchit environ la moitié de la chaleur émise par radiation.

8. Appareil selon les revendications 5 à 7, caractérisé en ce que le système de récupération de l'énergie irradiée est un système cellulaire de stockage de l'énergie, disposé à une certaine distance au-dessus de la face supérieure d'un caniveau en matériau réfractaire pour le dépôt des scories fondues et à l'état liquide.

Fig. 1.

Fig. 2.